# EUROPEAN PATENT APPLICATION

(11) **EP 4 808 249 A1**
(43) Date of publication of application: **16.09.2026**
(21) Application number: 24893420.0
(22) Date of filing: 19.11.2024
(51) Int. Cl.: H04W 74/00

(54) **INFORMATION SENDING METHOD AND APPARATUS**

(30) Priority: 23.11.2023 CN 202311589357
(71) Applicant: Huawei Technologies Co., Ltd., Shenzhen, Guangdong 518129 (CN)
(72) Inventor: KONG, Chuili, Shenzhen, Guangdong 518129 (CN); LUO, Hejia, Shenzhen, Guangdong 518129 (CN); YU, Tianhang, Shenzhen, Guangdong 518129 (CN); WANG, Jun, Shenzhen, Guangdong 518129 (CN)
(74) Representative: Maiwald GmbH
(86) International application number: PCT/CN2024/132940
(87) International publication number: WO 2025/108263

(57) **Abstract**

Embodiments of this application relate to the communication field, and provide an information sending method and an apparatus, to increase a quantity of successfully accessing users, and improve communication performance. The method includes: A first terminal device receives a first synchronization signal/physical broadcast channel block SSB; and sends a first message based on the first SSB, where the first message indicates beam position information of a beam position at which the first terminal device is located.

## Description

This application claims priority to Chinese Patent Application No. 202311589357.3, filed with the China National Intellectual Property Administration on November 23, 2023 and entitled "INFORMATION SENDING METHOD AND APPARATUS", which is incorporated herein by reference in its entirety.

### TECHNICAL FIELD

Embodiments of this application relate to the communication field, and in particular, to an information sending method and an apparatus.

### BACKGROUND

Compared with terrestrial communication, non-terrestrial network (non-terrestrial network, NTN) communication is characterized by large coverage, flexible networking, and the like. NTN communication use devices such as uncrewed aerial vehicles (uncrewed aerial vehicle, UAV), high-altitude platforms, and satellites to form networks, to provide services such as data transmission and voice communication for user equipment (user equipment, UE).

In a random access procedure of an NTN communication system, terminal devices located at a same beam position typically send access requests on random access channel (random access channel, RACH) opportunities (RACH opportunity, RO) for random access.

However, when a quantity of users requesting access exceeding a quantity of preambles (preamble) configured for an RO, an increase in the quantity of requesting users leads to a decrease in a quantity of successfully accessing users. Therefore, increasing the quantity of successfully accessing users is an urgent problem to be resolved.

### SUMMARY

Embodiments of this application provide an information sending method and an apparatus, to increase a quantity of successfully accessing users, and improve communication performance.

According to a first aspect, an information sending method is provided. The method may be performed by a first terminal device. The first terminal device may be a terminal device, or may be a component of the first terminal device, for example, a processor, a chip, or a chip system of the first terminal device, or may be a logical module or software that can implement all or a part of functions of the first terminal device. The method includes: receiving a first synchronization signal/physical broadcast channel block SSB; and sending a first message based on the first SSB, where the first message indicates beam position information of a beam position at which the first terminal device is located.

Based on this solution, after receiving the first SSB from a network device, the first terminal device may send the first message based on the first SSB, where the first message indicates the beam position information of the beam position at which the first terminal device is located. In this way, the network device can determine, based on the first message, a beam position at which a terminal device (namely, the first terminal device) that sends an access request is located, and respond correspondingly by using a downlink beam that can cover the beam position, to implement successful access of the first terminal device, and improve communication performance. Further, a quantity of terminal devices that succeed in access within a coverage area of the network device can be increased.

In a possible design, the information sending method further includes: receiving a first broadcast message, where the first broadcast message indicates a first SSB group, and the first SSB group includes the first SSB.

Based on this possible design, the network device may indicate the first SSB group to the first terminal device, so that the first terminal device may indicate the first SSB to the network device by using the first message, to cause the network device to learn of the beam position at which the first terminal device is located, so as to perform corresponding response by using the downlink beam that can cover the beam position.

In a possible design, sending the first message includes: sending the first message on a first time-frequency resource.

In a possible design, the first time-frequency resource indicates an index of the first SSB, and the first message is further used for random access and radio resource control RRC connection setup; and the information sending method further includes: receiving a second message, where the second message is used to respond to the random access and the RRC connection setup.

Based on this possible design, because the first message is further used for random access and RRC connection setup, after receiving the first message on the first time-frequency resource, the network device may determine, based on the first message, the beam position at which the terminal device that sends the first message is located, to send the second message by using a beam that can cover the beam position, so as to implement random access and RRC connection setup of the first terminal device. This avoids a case that, after the first time-frequency resource is configured for terminal devices at different beam positions and the first message is received on the first time-frequency resource, a correct beam cannot be selected to send the second message because the beam position at which the first terminal device is located cannot be determined.

In a possible design, the information sending method further includes: sending a third message on a second time-frequency resource, where the third message is used for random access, and the second time-frequency resource indicates an index of the first SSB; and receiving a fourth message, where the fourth message indicates the first time-frequency resource, and the fourth message is further used to respond to the random access.

In a possible design, the first message is further used for RRC connection setup, and the information sending method further includes: receiving a fifth message, where the fifth message is used to respond to the RRC connection setup.

Based on this possible design, because the first message is further used for RRC connection setup, after receiving the first message, the network device may determine, based on the first message, the beam position at which the first terminal device that requests RRC connection setup is located, to select a beam that can cover the first terminal device to send the fifth message, so as to implement the RRC connection setup of the first terminal device. This avoids a case that, after the first time-frequency resource is configured for terminal devices at different beam positions and the first message is received on the first time-frequency resource, a correct beam cannot be selected to send the fifth message because the beam position at which the first terminal device is located cannot be determined.

According to a second aspect, an information receiving method is provided. The method may be performed by a network device. The network device may be a network device, or may be a component of the network device, for example, a processor, a chip, or a chip system of the network device, or may be a logical module or software that can implement all or a part of functions of the network device. The method includes: sending a first SSB; and receiving a first message, where the first message indicates beam position information of a beam position at which a first terminal device is located.

Based on this solution, the network device may send the first SSB to the first terminal device, so that after receiving the first SSB from the network device, the first terminal device may send the first message based on the first SSB, where the first message indicates the beam position information of the beam position at which the first terminal device is located. In this way, the network device can determine, based on the first message, a beam position at which a terminal device (namely, the first terminal device) that sends an access request is located, and respond correspondingly by using a downlink beam that can cover the beam position, to implement successful access of the first terminal device, and improve communication performance. Further, a quantity of terminal devices that succeed in access within a coverage area of the network device can be increased.

In a possible design, the information sending method further includes: sending a first broadcast message, where the first broadcast message indicates a first SSB group, and the first SSB group includes the first SSB.

In a possible design, receiving the first message includes: receiving the first message on a first time-frequency resource.

In a possible design, the first time-frequency resource indicates an index of the first SSB, and the first message is further used for random access and radio resource control RRC connection setup; and the information sending method further includes: sending a second message, where the second message is used to respond to the random access and the RRC connection setup.

In a possible design, the information sending method further includes: receiving a third message on a second time-frequency resource, where the third message is used for random access, and the second time-frequency resource indicates an index of the first SSB; and sending a fourth message, where the fourth message indicates the first time-frequency resource, and the fourth message is further used to respond to the random access.

In a possible design, the first message is further used for RRC connection setup, and the information sending method further includes: sending a fifth message, where the fifth message is used to respond to the RRC connection setup.

For technical effect brought by any possible design of the second aspect, refer to technical effect brought by a corresponding design of the first aspect. Details are not described herein again.

With reference to the first aspect and the second aspect, in a possible design, the first message includes an identifier of the beam position.

With reference to the first aspect and the second aspect, in a possible design, the first message includes an index of a first radio frame, the index of the first radio frame indicates the beam position at which the first terminal device is located, and the first SSB is located in the first radio frame.

With reference to the first aspect and the second aspect, in a possible design, the first message includes an index of a second radio frame and first indication information, the index of the second radio frame and the first indication information indicate the beam position at which the first terminal device is located, the first indication information indicates a first group of subframes, the first SSB is located in the second radio frame, and the first SSB is located in the first group of subframes.

With reference to the first aspect and the second aspect, in a possible design, the first broadcast message includes an index of the first SSB group, and correspondingly, the first message includes the index of the first SSB group.

With reference to the first aspect and the second aspect, in a possible design, the first broadcast message includes information about a first position, correspondingly, the first message includes the information about the first position, and the first position is a position at which the network device sends the first SSB group.

With reference to the first aspect and the second aspect, in a possible design, the first broadcast message includes a first moment, correspondingly, the first message includes the first moment, and the first moment is a moment at which the network device sends the first SSB group.

According to a third aspect, a communication apparatus is provided, to implement various methods. The communication apparatus may be the first terminal device in the first aspect or the network device in the second aspect, or an apparatus included in the first terminal device or the network device, for example, a chip or a chip system. The communication apparatus includes a corresponding module, unit, or means (means) for implementing the methods. The module, the unit, or the means may be implemented by using hardware or software, or by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided, and includes a processor and a memory. The memory is configured to store computer instructions, and when the processor executes the instructions, the communication apparatus is caused to perform the method according to any one of the foregoing aspects. The communication apparatus may be the first terminal device in the first aspect or the network device in the second aspect, or an apparatus included in the first terminal device or the network device, for example, a chip or a chip system.

According to a fifth aspect, a communication apparatus is provided, and includes a processor and a communication interface. The communication interface is configured to communicate with a module outside the communication apparatus, and the processor is configured to execute a computer program or instructions, to cause the communication apparatus to perform the method according to any one of the foregoing aspects. The communication apparatus may be the first terminal device in the first aspect or the network device in the second aspect, or an apparatus included in the first terminal device or the network device, for example, a chip or a chip system.

According to a sixth aspect, a communication apparatus is provided, and includes at least one processor. The processor is configured to execute a computer program or instructions, to cause the communication apparatus to perform the method according to any one of the foregoing aspects. The communication apparatus may be the first terminal device in the first aspect or the network device in the second aspect, or an apparatus included in the first terminal device or the network device, for example, a chip or a chip system.

In some possible designs, the communication apparatus includes a memory, and the memory is configured to store necessary program instructions and data. The memory may be coupled to the processor, or may be independent of the processor.

In some possible designs, when the apparatus is a chip system, the apparatus may include a chip, or may include a chip and another discrete component.

It may be understood that when the communication apparatus provided in any one of the third aspect to the sixth aspect is a chip, a sending action/function of the communication apparatus may be understood as outputting information, and a receiving action/function of the communication apparatus may be understood as inputting information.

According to a seventh aspect, a computer-readable storage medium is provided. The computer-readable storage medium stores a computer program or instructions. When the computer program or the instructions are run on a communication apparatus, the communication apparatus is caused to perform the method according to any one of the foregoing aspects.

According to an eighth aspect, a computer program product including instructions is provided. When the computer program product is run on a communication apparatus, the communication apparatus is caused to perform the method according to any one of the foregoing aspects.

According to a ninth aspect, a communication system is provided. The communication system includes the first terminal device (or an apparatus included in the first terminal device, for example, a chip or a chip system) in the first aspect and the network device (or an apparatus included in the network device, for example, a chip or a chip system) in the second aspect.

For technical effects brought by any design in the third aspect to the ninth aspect, refer to technical effects brought by different designs of the first aspect or the second aspect. Details are not described herein again.

### BRIEF DESCRIPTION OF DRAWINGS

FIG. 1 is a schematic flowchart of random access according to an embodiment of this application;
FIG. 2 is a schematic flowchart of another type of random access according to an embodiment of this application;
FIG. 3 is a diagram of sending an SSB burst set according to an embodiment of this application;
FIG. 4 is a diagram of a relationship between a quantity of users requesting access and a quantity of successfully accessing users on a single random access channel opportunity RO according to an embodiment of this application;
FIG. 5 is a diagram of a relationship between a quantity of users requesting access and access resources on a single random access channel opportunity RO according to an embodiment of this application;
FIG. 6 is a diagram of beam distribution according to this application;
FIG. 7a and FIG. 7b are diagrams of network architectures of satellites according to this application;
FIG. 8 is a diagram of a network architecture of integration of a non-terrestrial network NTN and a terrestrial network according to this application;
FIG. 9 is a diagram of another network architecture of integration of an NTN and a terrestrial network according to this application;
FIG. 10 is a schematic flowchart of an information sending method according to this application;
FIG. 11 is a schematic flowchart of another information sending method according to this application;
FIG. 12 is a schematic flowchart of still another information sending method according to this application;
FIG. 13 is a schematic flowchart of still another information sending method according to this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of another communication apparatus according to an embodiment of this application.

### DESCRIPTION OF EMBODIMENTS

In descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described by using "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding of the technical solutions in embodiments of this application, the following first briefly describes technologies related to this application.

### 1. Non-terrestrial network (non-terrestrial network, NTN)

Currently, 5th generation (5th generation, 5G) new radio (new radio, NR) has entered a commercial deployment phase from a standardization phase. An NR standard is mainly researched and designed based on a feature of terrestrial communication. The terrestrial communication can provide a user terminal with high-rate, high-reliability, low-delay communication, and the like.

Compared with the terrestrial communication, NTN communication has prominent advantages such as global coverage, long-distance transmission, flexible networking, convenient deployment, and being not restricted by geographical conditions, and has been widely applied to a plurality of fields such as maritime communication, positioning and navigation, disaster relief, scientific experiments, video broadcasting, and earth observation. The NTN network can be integrated with a terrestrial network to complement each other, and jointly constitute a global seamless integrated communication network covering sea, land, air, space, and ground, so as to meet ubiquitous and diverse service requirements of users.

According to altitudes of flight platforms relative to the ground, the NTN may include an uncrewed aerial vehicle (uncrewed aerial vehicle, UAV) subnetwork, a high altitude platform subnetwork (high altitude platform subnetwork, HAPS), and a satellite communication subnetwork (SATCOM subnetwork).

For example, in the HAPS, a base station or a base station function is deployed on a high altitude flight platform (for example, an airplane) that is 8 km to 50 km away from the ground to provide coverage for terminals. In the SATCOM subnetwork, a base station or a base station function is deployed on a satellite that is more than 50 km away from the ground to provide coverage for terminals.

Further, according to an orbital altitude of a satellite, a satellite communication system may be classified into a geostationary earth orbit (geostationary earth orbit, GEO) satellite communication system, a medium earth orbit (medium earth orbit, MEO) satellite communication system, and a low-earth orbit (low-earth orbit, LEO) satellite communication system.

The GEO satellite communication system is also referred as a geosynchronous orbit satellite system. An orbital altitude of a GEO satellite is 35786 km, and a moving speed of the GEO satellite is the same as a rotational speed of the earth, that is, the GEO satellite can remain relatively stationary with respect to the ground. The GEO satellite communication system can provide large cell coverage. Generally, a diameter of a cell is 500 km. However, the GEO satellite communication also has evident disadvantages: (1) An orbit of the GEO satellite is far away from the earth, and a propagation loss in free space is large. As a result, a communication link budget is tight. To increase a transmit/receive gain, the satellite needs to be equipped with an antenna with a large diameter. (2) A communication transmission delay is high. For example, round-trip time may reach about 500 milliseconds. This cannot meet a requirement of a real-time service. (3) GEO orbital resources are limited, launch costs are high, and coverage cannot be provided for polar areas of the earth.

An orbital altitude of an MEO satellite ranges from 2000 km to 35786 km, and global coverage can be achieved with a small quantity of satellites. However, the orbital altitude of the MEO satellite is higher than an orbital altitude of an LEO satellite, and a transmission delay is still relatively large compared with the LEO satellite communication. Therefore, considering the advantages and the disadvantages of the MEO satellite communication, the MEO satellite is mainly used for positioning and navigation.

The orbital altitude of the LEO satellite ranges from 300 km to 2000 km and is smaller than the orbital altitude of the MEO satellite. The LEO satellite has advantages such as a small transmission delay, a small transmission loss, and low transmission costs.

### 2. Random access (random access, RA)

A purpose of the random access is to enable a terminal device to access a network and achieve uplink synchronization.

A random access procedure may be classified into 4-step random access (4-step random access, 4-step RA) and 2-step random access (4-step random access, 2-step RA).

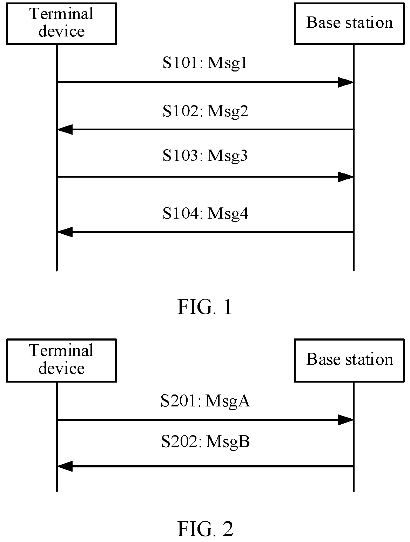

For the 4-step RA, an implementation procedure may include steps S101 to S104 shown in FIG. 1.

S101: A terminal device sends a message (message, Msg) 1 to a base station to which a target cell belongs (which is briefly referred to as a base station below), and correspondingly, the base station receives the Msg1 from the terminal device. The Msg1 includes a preamble (preamble).

For example, the Msg1 may also be referred to as a random access request message, or may be referred to as a random access preamble message. This is not limited in embodiments of this application.

Optionally, the preamble may be obtained by the terminal device from a system message. Specifically, the base station broadcasts a plurality of preambles, and the terminal device may select any one of the plurality of preambles as the preamble in step S101.

S102: The base station sends a Msg2 to the terminal device, and correspondingly, the terminal device receives the Msg2 from the base station. The Msg2 indicates a random access response (random access response, RAR).

For example, the Msg2 may also be referred to as an RAR message.

Optionally, the RAR includes an identifier of a preamble, an uplink grant (uplink grant, UL grant), and the like. For example, the UL grant may be simply understood as a time-frequency resource configured for a Msg3.

S103: The terminal device sends the Msg3 to the base station on a resource of the UL grant, and correspondingly, the base station receives the Msg3 from the terminal device. The Msg3 includes an identifier of the terminal device.

For example, the Msg3 may be referred to as a transmission scheduling message, or may be referred to as a radio resource control (radio resource control, RRC) connection establishment request (RRC connection request) message, or may be referred to as an RRC connection reestablishment request (RRCReestablishmentRequest), or may be referred to as an RRC connection resume request (RRCResumeRequest), or may be referred to as an RRC connection setup request (RRCSetupRequest). This is not limited in embodiments of this application.

Step S104: The base station sends a Msg4 to the terminal device, and correspondingly, the terminal device receives the Msg4 from the base station. The Msg4 indicates RRC connection setup (connection setup) of the terminal device.

For example, the Msg4 may be referred to as an RRC connection setup (RRC connection setup) message.

Optionally, after step S104, the terminal device may send a hybrid automatic repeat request acknowledgment (hybrid automatic repeat request acknowledgment, HARQ-ACK) to the base station as a response to the Msg4.

For the 4-step RA, an implementation procedure may include steps S201 and S202 shown in FIG. 2.

S201: A terminal device sends a MsgA to a base station, and correspondingly, the base station receives the MsgA from the terminal device. The MsgA includes a preamble and an identifier of the terminal device.

For example, the MsgA may also be referred to as a random access request message, or may be referred to as a random access preamble message.

S202: The base station sends a MsgB to the terminal device, and correspondingly, the terminal device receives the MsgB from the base station. The MsgB indicates an RAR and RRC connection setup of the terminal device.

For example, the MsgB may be referred to as an RRC connection setup message, or may be referred to as a random access response message.

### 3. Synchronization signal/physical broadcast channel block (synchronization signal/physical broadcast channel block, SSB)

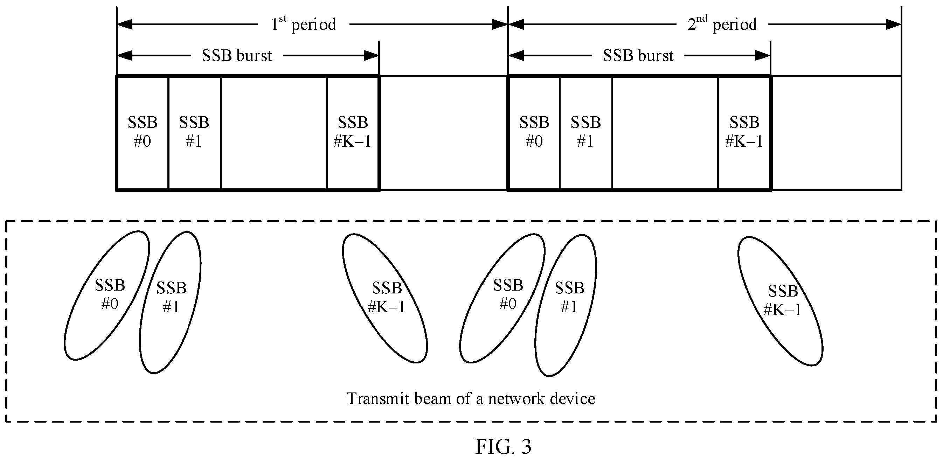

A base station may periodically send the SSB. One SSB period (SSB period) includes one SSB burst set (SSB burst set). In each SSB period, the SSB burst set has a same relative position. Therefore, the SSB period may also be understood as an SSB burst set period. One SSB burst set includes a plurality of SSBs. Each SSB has one index. In one SSB period, indexes of different SSBs are different from each other. As shown in FIG. 3, a length of an SSB period is denoted as *T_{SSB}*. A 1^{st} SSB period includes one SSB burst set, as shown by a bold line block in the 1^{st} period in FIG. 3. The SSB burst set includes K SSBs, and indexes of the K SSBs are respectively denoted as an SSB #0, an SSB #1, ..., and an SSB #K-1, where K is a positive integer, and K≥2. A 2^{nd} SSB period still includes one SSB burst set, as shown by a bold line block in the 2^{nd} period in FIG. 3. The SSB burst set is the same as the SSB burst set included in the 1^{st} period, and relative positions of SSBs with a same index in different SSB burst sets are the same.

Generally, a length of an SSB period is fixed. For example, the length of the SSB period may be 20 milliseconds (ms) unless the base station changes a sending configuration of the base station. In addition, the SSB period may also be referred to as a period of an SSB, or may be referred to as a period. This is not limited in embodiments of this application. In embodiments of this application, for ease of description, the SSB period is used as an example for description. This applies throughout and will not be repeated below.

For the base station, the base station sends an SSB by using a spatial transmission parameter (that is, a beam used to send a signal, which may be also referred to as a transmit beam). Specifically, the base station may send different SSBs in a same period by using different spatial transmission parameters. The SSBs in the 1^{st} period in FIG. 3 are used as an example. The base station may send the SSB #0 by using a spatial transmission parameter #0 (which may be also referred to as a beam #0, or may be referred to as a transmit beam #0). Similarly, the base station may send the SSB #1 by using a spatial transmission parameter #1, ..., and send the SSB #K-1 by using a spatial transmission parameter #K-1. The spatial transmission parameter #0, the spatial transmission parameter #1, ..., and the spatial transmission parameter #K-1 may respectively correspond to different beam directions, so that the base station covers terminal devices in different beam directions. For SSBs in an adjacent period, for example, K SSBs in the 2^{nd} period in FIG. 3, the base station may still continue a sending manner for the 1^{st} period, to be specific, send an SSB #0 by using the spatial transmission parameter #0, send an SSB #1 by using the spatial transmission parameter #1, ..., and send an SSB #K-1 by using the spatial transmission parameter #K-1. In other words, the base station may send SSBs with a same index in different periods by using a same space domain parameter. In other words, each SSB index corresponds to one spatial transmission parameter.

For the terminal device, the terminal device may receive and detect an SSB. If reference signal received power (reference signal received power, RSRP) of an SSB exceeds an RSRP threshold, and after the terminal device successfully performs demodulation and decoding, the terminal device may first determine an index of the SSB, that is, determine which SSB in a period the SSB is. Then, the terminal device determines, based on the SSB, configuration information used by the terminal device to initiate random access, that is, a random access channel (random access channel, RACH) opportunity (RACH opportunity, RO). The RO is a time-frequency resource for transmitting an uplink access signal in a random access procedure, and is an uplink resource.

Specifically, an association relationship between an SSB index and an RO enables, when the terminal device initiates an uplink access signal on the RO, the base station to use a corresponding space domain receiving parameter (that is, a beam used to receive a signal, which may be also referred to as a receive beam) to align with the terminal device. For example, the base station sends an SSB whose index is an SSB #0 in a direction of a beam #0. When a terminal device is in the direction of the beam #0, the terminal device can receive the SSB whose index is the SSB #0. The terminal device may measure RSRP of the SSB. After the RSRP of the SSB meets a specific condition, the terminal device may initiate an uplink access signal (for example, a Msg1) on an RO associated with the index the SSB #0, and the base station may receive, by using the beam #0, the uplink access signal on the RO associated with the SSB #0. Therefore, it can be ensured that signal power or energy of the received uplink access signal is high, and a success rate of random access of the terminal device is improved.

Specifically, the terminal device determines, based on the index of the SSB, a plurality of consecutive ROs associated with the index. Further, the terminal device may select one of the plurality of ROs to send the uplink access signal, so that the base station may receive the uplink access signal from the terminal device on the selected RO.

For example, the association relationship between the RO and the SSB index is implemented through mapping. During mapping of the SSB index to the RO, the SSB index is mapped first in frequency domain and then in time domain. For example, one SSB index may be mapped to a plurality of consecutive ROs.

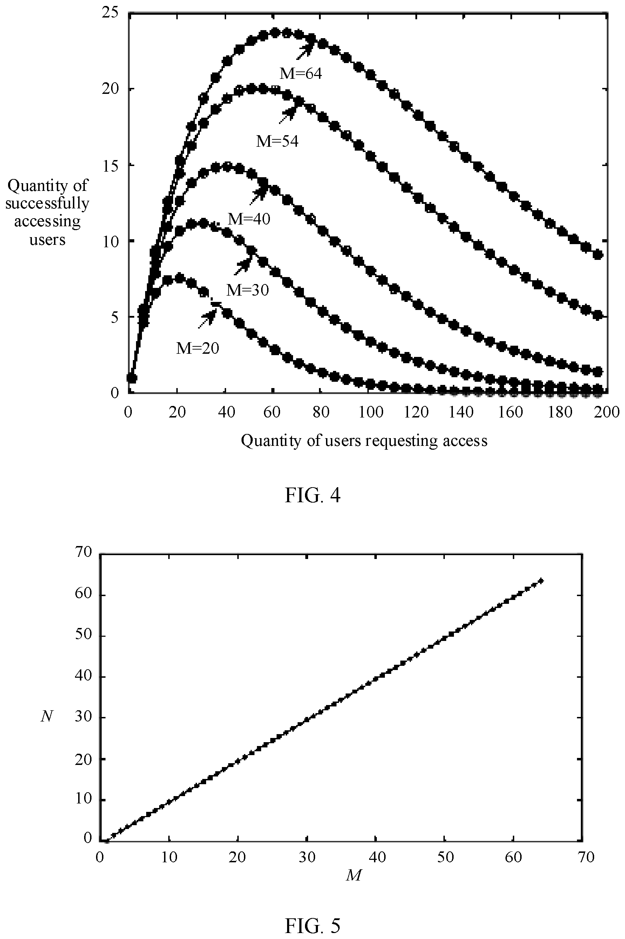

It should be understood that, that the SSB index is mapped to the RO may also be understood as that there is the association relationship between the RO and the SSB index. The association relationship may be a positive or negative association. For example, an RO may be described as an RO associated with an index. For another example, an index may be described as an index associated with an RO. For an RO, a quantity of successfully accessing users on the RO is $N {\left(1-\frac{1}{M}\right)}^{N - 1}$, where *N* indicates the quantity of users requesting access on the RO, and *M* indicates a quantity of preambles configured for the RO (that is, a quantity of uplink resources used to send the preambles). When *M* has different values (for example, the value of *M* is 20, 30, 40, 54, or 64), a relationship between N and a quantity of successfully accessing users on the RO is shown in FIG. 4. It can be learned from FIG. 4 that, when a value of *N* is less than or equal to the value of *M* (where in this case, it may also be considered that load is light), the quantity of successfully accessing users increases as the load increases; and when the value of *N* is greater than the value of *M* (where in this case, it may also be considered that the load is heavy), the quantity of successfully accessing users decreases as the load increases.

To increase the quantity of successfully accessing users, the quantity of users requesting access may be matched with access resources (for example, *M*). Specifically, as shown in FIG. 5, the value of *N* is made to be equal to the value of *M*.

In NR, a deployment position of a base station is selected based on a quantity of users. Therefore, a base station is usually deployed in an area in which there are many users, and a base station is usually not deployed in an area in which there are few users (such as an uninhabited area). In addition, broadcast beams in the NR are designed as scenario-based static beams. To be specific, based on coverage requirements of actual scenarios (for example, stadiums and tunnels) in a live network, a minimum gain of a beam is determined, so as to determine maximum widths of the beam in a vertical plane and a horizontal plane. Further, based on the widths of the beam and the coverage requirements of the scenario, a required quantity of beams and required beam directions are determined. In this way, a quantity of users requesting access in each beam matches access resources, to increase a quantity of successfully accessing users.

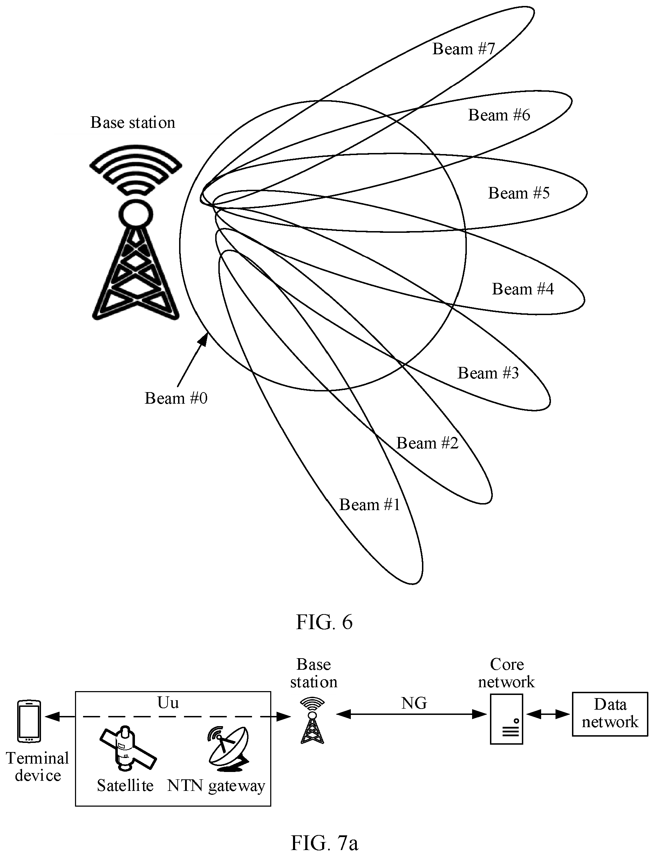

For example, in a "7+1" configuration manner, seven narrow beams and one wide beam are configured for the base station. Distribution of the eight beams may be shown in FIG. 6, that is, a beam #0 to a beam #7 in FIG. 6. It should be understood that the narrow beam is a relatively narrow beam in the eight beams, and the wide beam is a relatively wide beam in the eight beams.

In the NR, beam sweeping is usually uniform. To be specific, in an SSB burst set, beams carried in different SSB indexes point to different coverage areas. In other words, SSB indexes are in one-to-one correspondence with different beam directions (or different beam positions) of the base station. A mapping relationship between an SSB index and a beam varies with different values of a physical cell identifier (physical cell identifier, PCI) of a cell mod 3 (mod 3).

For example, the beam #0 to the beam #7 shown in FIG. 6 are used for illustration, an SSB burst set includes eight SSBs, and indexes of the eight SSBs are an SSB #0 to an SSB #7. A relationship between the beams and the SSB indexes may be shown in Table 1 below.

**Table 1**

| | Beam #0 | Beam #1 | Beam #2 | Beam #3 | Beam #4 | Beam #5 | Beam #6 | Beam #7 |
|---|---|---|---|---|---|---|---|---|
| PCI mod 3=0 | SSB #0 | SSB #1 | SSB #2 | SSB #3 | SSB #4 | SSB #5 | SSB #6 | SSB #7 |
| PCI mod 3=1 | SSB #6 | SSB #7 | SSB #0 | SSB #1 | SSB #2 | SSB #3 | SSB #4 | SSB #5 |
| PCI mod 3=2 | SSB #3 | SSB #4 | SSB #5 | SSB #6 | SSB #7 | SSB #0 | SSB #1 | SSB #2 |

However, in an NTN scenario, there are a large quantity of active users in a satellite coverage area. Especially for internet of things (internet of things, IoT) devices, as IoT is a mainstream application scenario of future satellite communication, there are a considerable quantity of IoT devices. For example, in a future communication network, it is expected that 10⁸ IoT devices exist per square kilometer, and a quantity of IoT devices is approximately 100 times a quantity of users existing per square kilometer in a 5G network. However, access resources are limited. Therefore, a quantity of users requesting access cannot match the access resources in an NTN.

Therefore, for an NTN system, a method for increasing the quantity of successfully accessing users needs to be redesigned. A solution that can be easily thought of is to increase beam sweeping frequency. The quantity of successfully accessing users is increased by increasing a quantity of times of sending an access request.

However, in a coverage area of a satellite, quantities of active users in different beams are greatly different. For example, the satellite may send information by using a beam #1 and a beam #2, where a coverage area of the beam #1 includes a town (that is, an area in which there are many users), and a coverage area of the beam #2 includes an ocean (that is, an area in which there are few users). Therefore, if a beam sweeping method in the NR (that is, uniform sweeping) is directly applied to the NTN, a result may be: There is no access requirement in the coverage area of the beam #2, but the beam #2 still participates in beam sweeping; or a user in the coverage area of the beam #2 has succeeded in access when sending an access request for the first time, but the beam #2 still participates in beam sweeping. As a result, access resources are wasted.

Therefore, a non-uniform beam sweeping scheme is considered. For areas (for example, the beam #1) with a large quantity of users, a sweeping frequency may be increased, while for areas (for example, the beam #2) with a small quantity of users, the sweeping frequency may be reduced. In this way, resources are saved, a quantity of successfully accessing users is increased, and access delay is reduced.

For example, a satellite (or a base station) may configure access resources a plurality of times for an area with a large quantity of users, thereby allowing the users in the area to send access requests a plurality of times. This effectively increase sweeping coverage of the beam over that area and thus increase a quantity of successfully accessing users in the area.

However, in comparison with NR, a coverage area of a satellite (or a base station) in NTN is larger, and the satellite (or the base station) corresponds to more beams. Therefore, it is not supported to configure a plurality of different access resources for a plurality of beams. In other words, when access resources are configured for different beams, access resources may overlap, and consequently, a quantity of successfully accessing users is reduced.

For example, areas covered by the beam #0 to the beam #7 are a beam position #0 to a beam position #7 respectively, an SSB burst set includes eight SSBs, and indexes of the eight SSBs are an SSB #0 to an SSB #7. Quantities of users requesting access in the beam position #0 to the beam position #3 are larger, and quantities of users requesting access in the beam position #4 to the beam position #7 are smaller. Therefore, sweeping frequency of the beam #0 to the beam #3 may be increased. Specifically, a configuration rule of the SSB burst set (or a mapping rule of the SSB burst set) may be shown in Table 2 (that is, Table 2(a) and Table 2(b)) below.

**Table 2(a)**

| SSB index | SSB #0 | SSB #1 | SSB #2 | SSB #3 | SSB #4 | SSB #5 | SSB #6 | SSB #7 |
|---|---|---|---|---|---|---|---|---|
| Beam position | Beam position #0 | Beam position #1 | Beam position #2 | Beam position #3 | Beam position #4 | Beam position #5 | Beam position #6 | Beam position #7 |

**Table 2(b)**

| SSB index | SSB #0 | SSB #1 | SSB #2 | SSB #3 | SSB #4 | SSB #5 | SSB #6 | SSB #7 |
|---|---|---|---|---|---|---|---|---|
| Beam position | Beam position #0 | Beam position #1 | Beam position #2 | Beam position #3 | Beam position #0 | Beam position #1 | Beam position #2 | Beam position #3 |

Table 2(a) and Table 2(b) respectively show access resources configured by the satellite (or the base station) at different moments. For example, a moment of configuration in Table 2(a) is before a moment of configuration in Table 2(b). In Table 2(a), each SSB index corresponds to a different beam position. In other words, the satellite (or the base station) configures different access resources for the beam position #0 to the beam position #7 respectively. In other words, users at the beam position #0 to the beam position #7 may send access requests based on the access resources configured in Table 2(a). For example, a user at the beam position #4 may send an access request on an access resource corresponding to the SSB #4.

In Table 2(b), a plurality of SSB indexes correspond to a same beam position. For example, both the SSB #0 and the SSB #4 correspond to the beam position #0. In other words, access resources respectively corresponding to the SSB #0 and the SSB #4 are configured for the beam position #0. In comparison with the uniform sweeping manner, a user at the beam position #0 may send an access request twice (that is, send access requests on the access resources respectively corresponding to the SSB #0 and the SSB #4), to improve access efficiency of the user.

However, in Table 2(a), the access resource corresponding to the SSB #4 is configured for a user at the beam position #4, and in Table 2(b), the access resource corresponding to the SSB #4 is configured for the user at the beam position #0. As a result, the user at the beam position #4 and the user at the beam position #0 send access requests on the same access resource, and the satellite (or the base station) cannot determine a beam position at which the user that sends the access request is located, and cannot respond correspondingly by using an accurate downlink beam. As a result, the user at the beam position #4 and the user at the beam position #0 fail to access, and a quantity of successfully accessing users is reduced.

In view of this, embodiments of this application provide an information sending method. In the method, after receiving a first SSB from a network device, a first terminal device may send a first message based on the first SSB, where the first message indicates beam position information of a beam position at which the first terminal device is located. In this way, the network device can determine, based on the first message, a beam position at which a terminal device (namely, the first terminal device) that sends an access request is located, and respond correspondingly by using a downlink beam that can cover the beam position, to implement successful access of the first terminal device, and improve communication performance. Further, a quantity of terminal devices that succeed in access within a coverage area of the network device can be increased.

It should be noted that, unless otherwise specified, in the following embodiments of this application, a beam is a physical beam sent by a radio frequency module of a base station, and energy is concentrated, by a component like a phased array antenna or a parabolic antenna through beamforming, in a specific angle range for sending. The beam carries an electromagnetic wave, and the electromagnetic wave carries information used for communication. In addition, in the following embodiments of this application, an area covered by a beam is referred to as a beam position.

The technical solutions in embodiments of this application may be applied to an NTN system like a satellite communication system, HAPS communication system, and an uncrewed aerial vehicle system, for example, an integrated communication and navigation (integrated communication and navigation, ICaN) system and a global navigation satellite system (global navigation satellite system, GNSS). The NTN system may be integrated with a conventional mobile communication system. For example, the mobile communication system may be a 4th generation (4th generation, 4G) communication system (for example, a long term evolution (long term evolution, LTE) system), a 5G communication system (for example, an NR system), a sidelink (sidelink, SL) communication system, a machine to machine (machine to machine, M2M) communication system, an internet of things (internet of things, IoT) communication system, an internet of vehicles communication system, a future mobile communication system, or the like.

The communication system applicable to this application is merely an example for description. The communication system and the communication scenario applicable to this application are not limited thereto. The communication system and the communication scenario provided in this application do not constitute any limitation on the solutions of this application. This applies throughout and will not be repeated below.

For example, the communication system applicable to the solutions of this application may include at least one terminal device and at least one network device. For example, mutual communication may be performed between terminal devices, between a terminal device and a network device, and between network devices in a wired or wireless manner.

Optionally, the terminal device may be a user side device having a wireless transceiver function, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in an IoT, device-to-device (device-to-device, D2D), V2X, SL, M2M, a 5G network, or a future evolved public land mobile network (public land mobile network, PLMN). The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, an uncrewed aerial vehicle having an uncrewed aerial vehicle (uncrewed aerial vehicle, UAV) to uncrewed aerial vehicle (UAV to UAV, U2U) communication capability, or the like. The terminal device may be mobile, or may be fixed. This is not specifically limited in this application.

Optionally, the network device may be a network side device having a wireless transceiver function, or may be a chip or a chip system or module disposed in the device. The network device is located in a radio access network (radio access network, RAN) of a mobile communication system, and is configured to provide an access service for a terminal device.

In a possible implementation, the network device may be a wireless relay node or a wireless backhaul node. For example, the network device may be used as a layer-1 relay device, and is configured to regenerate a physical-layer signal (that is, perform radio frequency filtering, frequency conversion, and amplification), and does not have another higher protocol layer.

In another possible implementation, the network device may implement some or a part of functions of the base station. For example, the network device may be an evolved NodeB (evolved NodeB, eNB or eNodeB) in an LTE or evolved LTE (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a device that implements a base station function in IoT, D2D, V2X, SL, or M2M.

Alternatively, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or a CU-CP and a CU-UP), the DU, and the RU in this application may be implemented by using a software module, a hardware module, or a combination of a software module and a hardware module.

For example, the base station in embodiments of this application may include base stations in various forms, for example, a macro base station, a micro base station (which is also referred to as a small cell), a relay station, and an access point. This is not specifically limited in embodiments of this application.

Optionally, the network device in embodiments of this application may be deployed on a non-ground platform, for example, deployed on a low-altitude platform (for example, an uncrewed aerial vehicle), a high-altitude platform (for example, an airplane), or a satellite. Therefore, the network device in embodiments of this application may also be referred to as a non-terrestrial network device.

For example, the network device is deployed on a satellite, or the network device is a satellite. The communication system may further include an NTN gateway (NTN gateway) (or referred to as a gateway station). Generally, the NTN gateway is deployed on the ground. The NTN gateway may communicate with a satellite, and a link between the satellite and the NTN gateway may be referred to as a feeder link (feeder link).

As shown in FIG. 7a, when the satellite serves as a radio relay node, or the satellite has a relay forwarding function, the NTN gateway has functions of the base station or a part of functions of the base station. In this case, the NTN gateway may serve as a base station. Alternatively, the NTN gateway and the base station may be separately deployed. In other words, in addition to the NTN gateway, the communication system further includes an NTN base station deployed on the ground. In FIG. 7a, an example in which the NTN gateway and the base station are separately deployed is used for description.

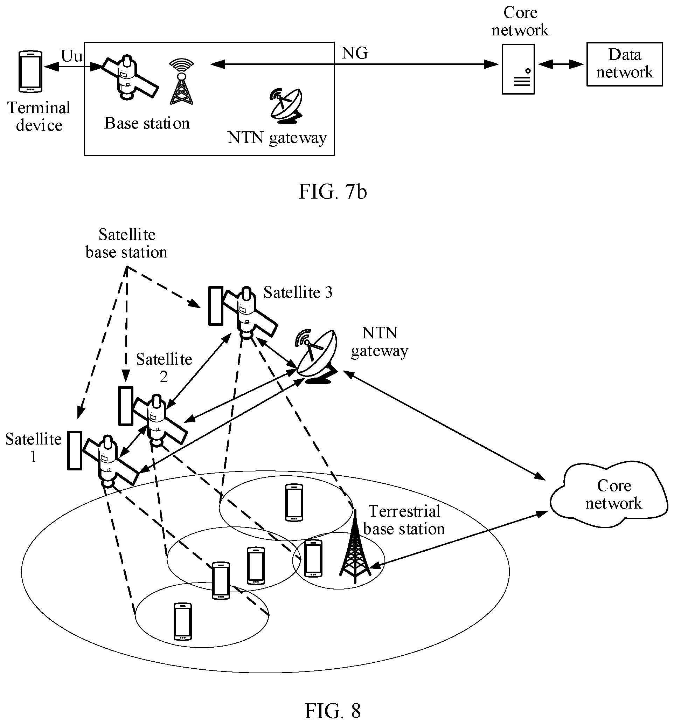

As shown in FIG. 7b, when the satellite can implement a part of or all functions of the base station, the satellite has a data processing capability, and the satellite may be used as a base station. In this case, the NTN gateway and the satellite may transmit user plane data of the terminal device through a satellite radio interface (satellite radio interface, SRI).

In an architecture shown in FIG. 7a or FIG. 7b, NG refers to an interface between a base station and a core network. Uu is an interface between a base station and a terminal device. It may be understood that, with evolution of a communication system, a name of an interface between a base station and a core network, a name of an interface between a base station and a terminal device, and a name of an interface between base stations may also change. This is not specifically limited in this application.

Optionally, when the satellite is used as a wireless relay node and has a relay forwarding function, it may be considered that the satellite operates in a transparent (transparent) mode. When the satellite has a data processing capability and can implement a part of or all functions of the base station, it may be considered that the satellite operates in a regenerative (regenerative) mode. A satellite may support only the transparent mode or only the regenerative mode, or may support the transparent mode and the regenerative mode, and can be switched between the transparent mode and the regenerative mode.

In some implementation scenarios, an NTN and a terrestrial network may be integrated.

FIG. 8 is a diagram of an architecture of an integrated network of an NTN and a terrestrial network according to an embodiment of this application. In the architecture shown in FIG. 8, a satellite 1, a satellite 2, and a satellite 3 operate in a regenerative mode. The satellites may be used as NTN base stations, or NTN base stations may be deployed on the satellites.

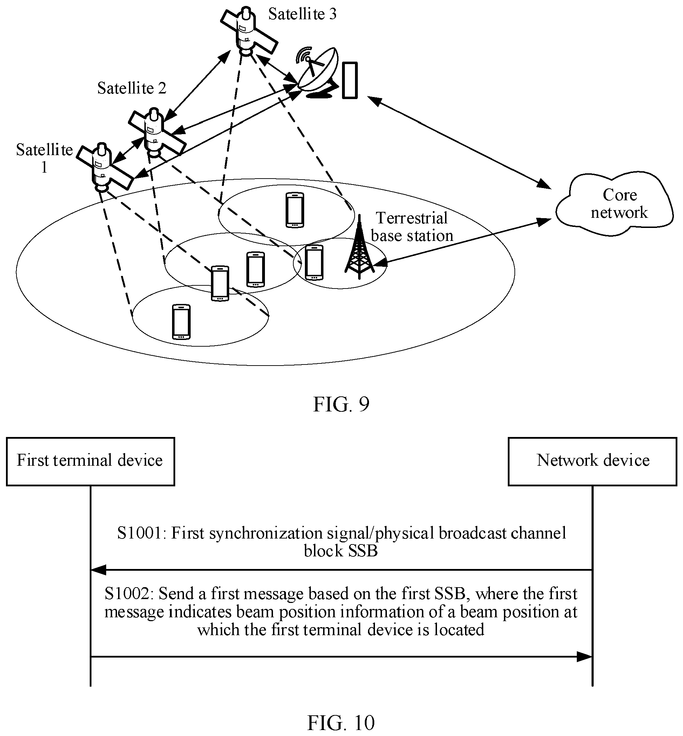

FIG. 9 is a diagram of another architecture of an integrated network of an NTN and a terrestrial network according to an embodiment of this application. In the architecture shown in FIG. 9, a satellite 1, a satellite 2, and a satellite 3 operate in a transparent mode. Therefore, an NTN base station needs to be additionally deployed. The NTN base station refers to a base station in the NTN.

In addition, the architecture shown in FIG. 8 or FIG. 9 may further include a terrestrial base station, and the terrestrial base station is a base station in the terrestrial network. The NTN base station and the terrestrial base station may be interconnected through a common core network. As a bearer network, the core network provides an interface to a data network, provides communication connection, authentication, management, and policy control for a terminal device, bears a data service, and the like. For example, the core network may include network elements such as an access and mobility management function (access and mobility management function, AMF) network element, a session management function (session management function, SMF) network element, an authentication server function (authentication server function, AUSF) network element, a policy control function (policy control function, PCF) network element, and a user plane function (User Plane Function, UPF) network element.

Alternatively, the NTN base station and the terrestrial base station may implement assistance and interconnection with higher time validity through an interface defined between the base stations. For example, an interface between base stations may be an Xn interface, and an interface between a base station and a core network may be an NG interface. Certainly, the interface between the base stations and the interface between the base station and the core network may alternatively have other implementations. This is not specifically limited in this application.

Optionally, in embodiments of this application, the satellite may provide a service for the terminal device by using a beam. For example, different beams may provide services for the terminal device through one or more of time division, frequency division, and space division. The satellite may operate in a regenerative mode, or may operate in a transparent mode. In addition, the satellite may operate in a non-staring mode or a staring mode. The satellite may be an LEO satellite, an MEO satellite, a GEO satellite, or the like. This is not limited.

It may be understood that the satellites in the architectures in FIG. 7a to FIG. 9 may be replaced with ground loads on other flight platforms such as an uncrewed aerial vehicle and an airplane.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

With reference to the communication systems shown in FIG. 7a to FIG. 9, the following describes, by using interaction between a network device and a terminal device as an example, an information sending method provided in embodiments of this application.

It should be noted that in the following embodiments of this application, a name of a message between devices, a name of each parameter, a name of each piece of information, or the like is merely an example, and may be another name in another embodiment. This is not specifically limited in the method provided in this application.

It may be understood that, in embodiments of this application, an execution entity may perform a part of or all of steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

For example, in the following embodiments, the flight platform mentioned above is a satellite, that is, satellite communication in an NTN is used as an example for description. Certainly, the method is also applicable to another scenario in the NTN, for example, an HAPS. This is not specifically limited herein.

FIG. 10 is a flowchart of an information sending method according to an embodiment of this application. The information sending method may include the following steps.

S1001: A network device sends a first SSB to a first terminal device, and correspondingly, the first terminal device receives the first SSB from the network device.

Optionally, the network device may send an SSB burst set, where the SSB burst set includes a plurality of SSBs, and the plurality of SSBs include the first SSB. Further, the network device may send the plurality of SSBs by using one or more beams.

In an example, the plurality of SSBs in the SSB burst set respectively correspond to different beam positions. In other words, the network device may respectively send the plurality of SSBs by using different beams. For example, in this example, a correspondence between the plurality of SSBs and the beam positions (or a configuration rule of the SSB burst set) may be shown in Table 2(a). For details, refer to the related descriptions of Table 2(a). Details are not described herein again.

In another example, at least one of the plurality of SSBs in the SSB burst set corresponds to one beam position. In other words, the network device may send the at least one SSB by using a same beam. For example, in this example, a correspondence between the plurality of SSBs and the beam positions (or a configuration rule of the SSB burst set) may be shown in Table 2(b). For details, refer to the related descriptions of Table 2(b). Details are not described herein again.

Optionally, the network device may send the first SSB at different moments by using different beams. In other words, at different moments, the network device configures, for terminal devices in different beam coverage (or beam positions), an access resource indicated by an index of the first SSB (or an access resource corresponding to the index of the first SSB).

The configuration rule shown in Table 2 is used as an example. The index of the first SSB may be the SSB #4 in Table 2. It can be learned from Table 2 that the network device first sends the SSB #4 by using a beam #4, configures an access resource indicated by the SSB #4 to a terminal device at a beam position #4 (that is, a coverage area of the beam #4), then sends the SSB #4 by using a beam #0, and configures the access resource indicated by the SSB #4 to a terminal device at a beam position #0 (that is, a coverage area of the beam #0).

For example, the access resource indicated by the index of the first SSB may be understood as one or more ROs associated with the index of the first SSB. Because the RO is a time-frequency resource used to transmit an uplink access signal in a random access procedure, the access resource indicated by the index of the first SSB may also be understood as a time-frequency resource associated with the index of the first SSB.

S1002: The first terminal device sends a first message based on the first SSB, and correspondingly, the network device receives the first message from the first terminal device. The first message indicates beam position information of a beam position at which the first terminal device is located.

Optionally, that the first terminal device sends the first message includes: The first terminal device sends the first message to the network device on a first time-frequency resource, and correspondingly, the network device receives the first message from the first terminal device on the first time-frequency resource.

Example 1: The first time-frequency resource is the access resource indicated by the index of the first SSB, or the first time-frequency resource indicates the index of the first SSB. In other words, the network device can determine the index of the first SSB based on the first time-frequency resource. Alternatively, it may be considered as that the index of the first SSB indicates the first time-frequency resource. In other words, the first terminal device may learn, based on the index of the first SSB, of an associated time-frequency resource (that is, the first time-frequency resource).

For example, in this example, sending the first message based on the first SSB may be understood as: sending the first message on the first time-frequency resource indicated by the index of the first SSB.

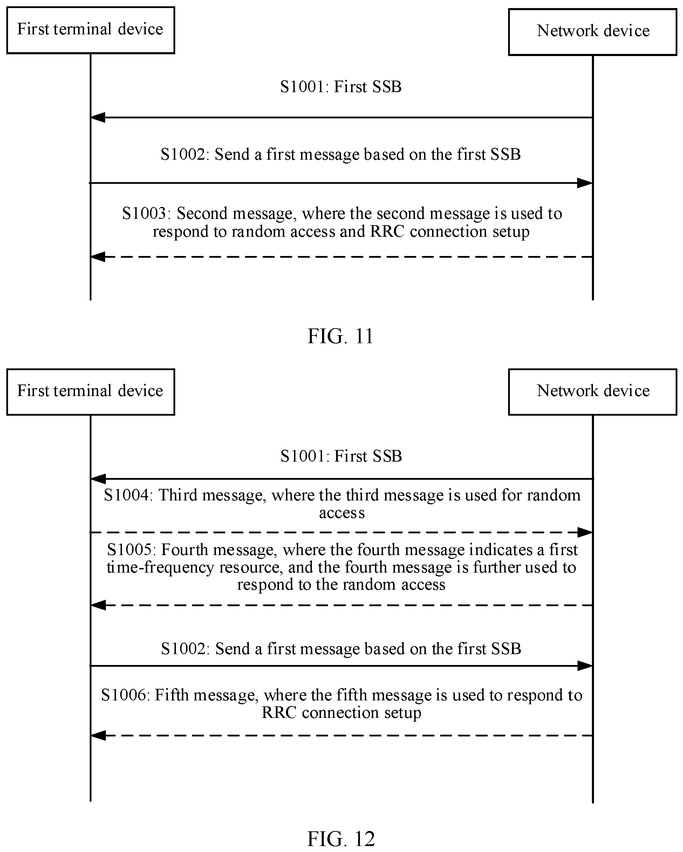

Optionally, in this example, the first message is further used for random access and RRC connection setup. Further, as shown in FIG. 11, the information sending method further includes the following step S1003.

S1003: The network device sends a second message to the first terminal device, and correspondingly, the first terminal device receives the second message from the network device. The second message is used to respond to the random access and the RRC connection setup.

Optionally, because the first message indicates the beam position information of the beam position at which the first terminal device is located, when the access resource (that is, the first time-frequency resource) indicated by the index of the first SSB is configured to be used by terminal devices at different beam positions to request to access, the network device may first determine, based on the first time-frequency resource, a beam position corresponding to the first time-frequency resource (that is, a beam position at which a terminal device that can send an access request on the first time-frequency resource is located, for example, the foregoing different beam positions), and further determine, based on an indication of the first message from the beam position corresponding to the first time-frequency resource, the beam position at which the first terminal device is located. Therefore, an accurate beam can be selected, and the second message can be sent to the first terminal device.

The configuration rule shown in Table 2 is used as an example. The index of the first SSB may be the SSB #4 in Table 2. It can be learned from Table 2 that the network device sends the SSB #4 by using a beam #4 and a beam #0 sequentially, so that the access resource (that is, the first time-frequency resource) indicated by the index of the first SSB is separately configured for a terminal device at the beam position #4 (that is, a coverage area of the beam #4) and a terminal device at the beam position #0 (that is, a coverage area of the beam #0). Therefore, when receiving the first message on the first time-frequency resource, the network device first determines, based on the first time-frequency resource, the beam positions (that is, the beam position #4 and the beam position #0) corresponding to the first time-frequency resource, and further determines, based on the beam position information indicated by the first message, the beam position at which the first terminal device is located, to send the second message by using a beam that can cover the beam position.

Optionally, that the first message is further used for random access and RRC connection setup may be understood as follows: The first message is used to request random access and request RRC connection setup, or the first message may be a random access request and an RRC connection setup request.

For example, the first message may be carried in a MsgA, and correspondingly, the second message is a MsgB.

Based on this example, because the first message is further used for random access and RRC connection setup, after receiving the first message on the first time-frequency resource, the network device may determine, based on the first message, the beam position at which the terminal device that sends the first message is located, to send the second message by using the beam that can cover the beam position, so as to implement random access and RRC connection setup of the first terminal device. This avoids a case that, after the first time-frequency resource is configured for terminal devices at different beam positions and the first message is received on the first time-frequency resource, a correct beam cannot be selected to send the second message because the beam position at which the first terminal device is located cannot be determined.

Example 2: A second time-frequency resource is the access resource indicated by the first SSB, or the second time-frequency resource indicates the index of the first SSB. In other words, the network device can determine the first SSB based on the second time-frequency resource. Alternatively, it may be considered as that the index of the first SSB indicates the second time-frequency resource. In other words, the first terminal device may learn, based on the index of the first SSB, of a time-frequency resource (that is, the second time-frequency resource) associated with the first SSB.

For example, in this example, sending the first message based on the first SSB may be understood as: determining the second time-frequency resource based on the index of the first SSB, and further determining the first time-frequency resource based on the second time-frequency resource, to send the first message on the first time-frequency resource.

Optionally, as shown in FIG. 12, the information sending method further includes the following steps S1004 and S1005. In other words, after determining the second time-frequency resource, the first terminal device may determine the first time-frequency resource based on the following steps S1004 and S1005.

S1004: The first terminal device sends a third message to the network device on the second time-frequency resource, and correspondingly, the network device receives the third message from the first terminal device on the second time-frequency resource. The third message is used for random access.

S1005: The network device sends a fourth message to the first terminal device, and correspondingly, the first terminal device receives the fourth message from the network device. The fourth message indicates the first time-frequency resource, and the fourth message is further used to respond to the random access.

For example, the third message may be a Msg1, and correspondingly, the fourth message is a Msg2.

Optionally, because the first message is carried on the first time-frequency resource, when the access resource (that is, the second time-frequency resource) indicated by the index of the first SSB is configured to be used by terminal devices at different beam positions to request to access, after the network device determines, based on the second time-frequency resource, a beam position at which the first terminal device may be located (that is, a beam position at which a terminal device that can send an access request on the second time-frequency resource is located, for example, the foregoing different beam positions), the network device cannot further determine the beam position at which the first terminal device is located.

The configuration rule shown in Table 2 is used as an example. The index of the first SSB may be the SSB #4 in Table 2. It can be learned from Table 2 that the network device sends the SSB #4 by using a beam #4 and a beam #0 sequentially, so that the access resource (that is, the second time-frequency resource) indicated by the index of the first SSB is separately configured for a terminal device at the beam position #4 (that is, a coverage area of the beam #4) and a terminal device at the beam position #0 (that is, a coverage area of the beam #0). Therefore, when receiving the third message on the second time-frequency resource, the network device cannot determine whether the third message is from the terminal device at the beam position #0 or the terminal device at the beam position #4.

Optionally, because the network device cannot determine the beam position at which the terminal device that sends the third message is located, step S1005 may include the following two possible implementations.

In a possible implementation, the network device sends, by using a blind sending mechanism, the fourth message to each terminal device at the beam position corresponding to the second time-frequency resource, so that the first terminal device at the beam position corresponding to the second time-frequency resource can also receive the fourth message.

For example, the beam position corresponding to the second time-frequency resource may be understood as a coverage area of a beam used to send the first SSB. Because the second time-frequency resource is configured to be used by terminal devices at different beam positions to request to access, the second time-frequency resource corresponds to a plurality of beam positions.

Optionally, the network device may send the fourth message to terminal devices at the plurality of beam positions in the following two manners.

Manner 1: The network device sends the fourth message by using a multi-peak beam.

For example, in Manner 1, the network device may determine wave peaks of the multi-peak beam based on the plurality of beam positions corresponding to the second time-frequency resource. In other words, a quantity of wave peaks of the multi-peak beam is equal to a quantity of the plurality of beam positions corresponding to the second time-frequency resource, and each of the wave peaks of the multi-peak beam corresponds to one of the plurality of beam positions. Therefore, after the network device sends the fourth message by using the multi-peak beam, all the terminal devices at the plurality of beam positions can receive the fourth message.

Manner 2: The network device sends the fourth message in a time division manner.

For example, in Manner 2, the network device may separately send, based on the plurality of beam positions corresponding to the second time-frequency resource, the fourth message at different moments by using different beams. Each of coverage areas of the beams used to send the fourth message includes one of the plurality of beam positions. Therefore, after the network device sends the fourth message by using the plurality of beams, all the terminal devices at the plurality of beam positions can receive the fourth message.

In another possible implementation, the network device determines, in a beam direction derivation manner based on a beam direction for receiving the third message, the beam position at which the terminal device that sends the third message may be located, and selects a beam that can cover the beam position to send the fourth message to the terminal device in the area, so that the first terminal device can also receive the fourth message.

Optionally, in this possible implementation, the beam position that is determined by the network device and at which the terminal device that sends the third message may be located includes one or more beam positions. When one beam position is determined, the network device may select a beam that can cover the beam position to send the fourth message to a terminal device at the beam position, so that the first terminal device can also receive the fourth message.

Optionally, when a plurality of beam positions are determined, the network device may send the fourth message by using a multi-peak beam, or send the fourth message in a time division manner.

For example, when the network device sends the fourth message by using the multi-peak beam, a quantity of wave peaks of the multi-peak beam is equal to a quantity of the plurality of beam positions, and each of the wave peaks of the multi-peak beam corresponds to one of the plurality of beam positions. Therefore, after the network device sends the fourth message by using the multi-peak beam, all the terminal devices at the plurality of beam positions can receive the fourth message.

When the network device sends the fourth message in the time division manner, the network device separately sends the fourth message at different moments by using different beams. Each of coverage areas of the beams used to send the fourth message includes one of the plurality of beam positions. Therefore, after the network device sends the fourth message by using the plurality of beams, all the terminal devices at the plurality of beam positions can receive the fourth message.

Optionally, in this example, because all the terminal devices at the plurality of beam positions receive the fourth message, in step S1001, the network device may receive, on the first time-frequency resource, first messages from terminal devices at different beam positions.

Optionally, in this example, the first message is further used for RRC connection setup. Further, as shown in FIG. 12, the information sending method further includes the following step S1006.

S1006: The network device sends a fifth message to the first terminal device, and correspondingly, the first terminal device receives the fifth message from the network device. The fifth message is used to respond to the RRC connection setup.

Optionally, because the first message indicates the beam position information of the beam position at which the first terminal device is located, when a plurality of terminal devices at a plurality of beam positions send the first message to the network device, the network device may determine, based on the first time-frequency resource used to receive the first message, a beam position corresponding to the first time-frequency resource (that is, a beam position at which a terminal device that can send the first message on the first time-frequency resource is located, for example, the foregoing plurality of beam positions), and further determines, based on an indication of the first message from the beam position corresponding to the first time-frequency resource, the beam position at which the first terminal device is located. Therefore, an accurate beam can be selected, and the fifth message can be sent to the first terminal device.

An example in which an SSB #4 indicates the first time-frequency resource, and the network device sends the SSB #4 by using a beam #4 and a beam #0 sequentially, so that the first time-frequency resource is separately configured for a terminal device at a beam position #4 and a terminal device at a beam position #0 is used. When receiving the first message on the first time-frequency resource, the network device first determines, based on the first time-frequency resource, the beam positions (that is, the beam position #4 and the beam position #0) corresponding to the first time-frequency resource, and further determines, based on the beam position information indicated by the first message, the beam position at which the first terminal device is located, to send the fifth message by using a beam that can cover the beam position.

Optionally, that the first message is further used for RRC connection setup may be understood as follows: The first message is used to request RRC connection setup, or the first message may be an RRC connection setup request.

For example, the first message may be carried in a Msg3, and correspondingly, the fifth message is a Msg4.

Based on this example, because the first message is further used for RRC connection setup, after receiving the first message, the network device may determine, based on the first message, the beam position at which the first terminal device that requests RRC connection setup is located, to select a beam that can cover the first terminal device to send the fifth message, so as to implement the RRC connection setup of the first terminal device. This avoids a case that, after the first time-frequency resource is configured for terminal devices at different beam positions and the first message is received on the first time-frequency resource, a correct beam cannot be selected to send the fifth message because the beam position at which the first terminal device is located cannot be determined.

According to the information sending method provided in this embodiment of this application, after receiving the first SSB from the network device, the first terminal device may send the first message based on the first SSB, where the first message indicates the beam position information of the beam position at which the first terminal device is located. In this way, the network device can determine, based on the first message, a beam position at which a terminal device (namely, the first terminal device) that sends an access request is located, and respond correspondingly by using a downlink beam that can cover the beam position, to implement successful access of the first terminal device, and improve communication performance. Further, a quantity of terminal devices that succeed in access within a coverage area of the network device can be increased.

The foregoing is an overall description of the information sending method provided in this embodiment of this application. The following describes in detail the "first message" in the foregoing embodiment. For example, the first message may include the following four possible implementations.

In a first possible implementation, the first message includes the beam position information of the beam position at which the first terminal device is located. For ease of description, "the beam position information of the beam position at which the first terminal device is located" is briefly referred to as "beam position information" below. This applies throughout and will not be repeated below.

For example, the beam position information may be an identifier (identifier, ID) of the beam position at which the first terminal device is located. For example, the beam position information may be an index of the beam position at which the first terminal device is located. Alternatively, the beam position information may be information that can indicate the beam position at which the first terminal device is located. This is not limited in embodiments of this application. The following uses, for description, an example in which the beam position information is the ID of the beam position at which the first terminal device is located.

In an example, the ID of the beam position is an absolute ID of the beam position at which the first terminal device is located.

Optionally, in this example, the ID of the beam position is indicated by the network device to the first terminal device. For example, the first terminal device may pre-store global beam position IDs, and then the network device may indicate, from the global beam position IDs, the ID of the beam position at which the first terminal device is located. In this way, when the first terminal device sends the first message, the network device can determine a unique beam position based on the ID that is of the beam position and that is included in the first message.

Optionally, the network device may indicate, to the first terminal device by using a broadcast message, the ID of the beam position at which the first terminal device is located, or the network device may send, to the first terminal device, indication information indicating the ID of the beam position at which the first terminal device is located.

For example, a quantity of global beam position IDs is 1024, and the 1024 beam position IDs are a beam position #0 to a beam position #1023. The first message may indicate, by using 10 bits, the ID of the beam position at which the first terminal device is located. For example, the ID of the beam position at which the first terminal device is located is a beam position #128. In this case, the 10 bits may be 0010000000.

In another example, the ID of the beam position is a relative ID of the beam position at which the first terminal device is located.

Optionally, in this example, the ID of the beam position is, when a coverage area of the network device is a first coverage area, an ID of the beam position at which the first terminal device is located in a plurality of beams configured by the network device. The first terminal device is located in the first coverage area.

Optionally, the first coverage area is determined based on an ephemeris of the network device. For example, the network device may divide, into a plurality of sub-areas based on the ephemeris of the network device, an area covered on a motion path of the network device, where the plurality of sub-areas include the first coverage area. Further, beams configured in each sub-area may be determined as a beam group associated with the sub-area, so that the network device may communicate with a terminal device in the sub-area by using the beam group. Because each beam in the beam group corresponds to one beam position, a quantity of beam positions corresponding to the beam group is the same as a quantity of beams in the beam group. Therefore, the beam group associated with the sub-area may also be understood as a beam position group associated with the sub-area.

Optionally, beam position groups associated with different sub-areas have a same quantity or different quantities of beam positions. The network device may configure, for a beam position in each beam position group, an ID of the beam position in the beam position group. In this case, in one beam position group, an ID of each beam position is a relative ID.

Optionally, the network device may notify, in advance, the first terminal device of a relationship between the plurality of sub-areas and beam position groups associated with the plurality of sub-areas.

For example, a quantity of sub-areas is 4, and a beam position group in each sub-area includes 16 beam positions. A relationship shown in Table 3 is met between the plurality of sub-areas and beam position groups associated with the plurality of sub-areas.

**Table 3**

| Sub-area | Beam position group |
|---|---|
| Sub-area #1 | Beam position group #1 |
| Sub-area #2 | Beam position group #2 |
| Sub-area #3 | Beam position group #3 |
| Sub-area #4 | Beam position group #4 |

Alternatively, the relationship between the plurality of sub-areas and the beam position groups associated with the plurality of sub-areas may be represented by a set, for example, {sub-area #1: beam position group #1}; {sub-area #2: beam position group #2}; {sub-area #3: beam position group #3}; and {sub-area #4: beam position group #4}.

Optionally, the network device may notify a terminal device in a current sub-area of a beam position group corresponding to the current sub-area, and notify terminal devices at different beam positions of IDs of the beam positions at which the terminal devices are located, so that when the first terminal device sends the first message, the network device can determine the unique beam position based on the ID that is of the beam position and that is included in the first message.

For example, when the current sub-area is the sub-area #1, terminal devices in the sub-area #1 may be notified of the beam position group #1 corresponding to the sub-area #1, and IDs of beam positions at which the terminal devices are located are sent to the terminal devices at the different beam positions by using beams respectively corresponding to the beam positions in the beam position group #1. For example, the beam position group #1 includes 16 beam positions, and the 16 beam positions are a beam position #0 to a beam position #15. The network device may send IDs of beam positions to the different beam positions respectively by using 16 beams respectively corresponding to the 16 beam positions, where each beam is used to send an ID of a beam position corresponding to the beam. For example, a beam #0 is used to send an ID of the beam position #0, and by analogy, a beam #15 is used to send an ID of the beam position #15, so that all terminal devices located at the 16 beam positions learn of IDs of beam positions at which the terminal devices are located.

Optionally, the network device may indicate, to the first terminal device by using a broadcast message, the ID of the beam position at which the first terminal device is located, or the network device may send, to the first terminal device, indication information indicating the ID of the beam position at which the first terminal device is located.

For example, a beam position group in a sub-area includes 16 beam positions, and IDs of the 16 beam position are respectively a beam position #0 to a beam position #15. The first message may indicate, by using five bits, the ID of the beam position at which the first terminal device is located. For example, the ID of the beam position at which the first terminal device is located is a beam position #8. In this case, the 5 bits may be 01000.

In a second possible implementation, the first message includes information about a first radio frame. The information about the first radio frame indicates the beam position at which the first terminal device is located, and the first SSB is located in the first radio frame.

For example, the information about the first radio frame may include an index of the first radio frame, or may be other information (for example, some bits of the index of the first radio frame) indicating the first radio frame. This is not limited in embodiments of this application.

For example, the first radio frame may include an SSB burst set. The SSB burst set includes a plurality of SSBs, and the plurality of SSBs include the first SSB.

Optionally, in this possible implementation, each radio frame includes one SSB burst set, and SSB burst sets in different radio frames may have a same configuration rule or different configuration rules. For example, the configuration rule of the SSB burst set may be shown in Table 2(a) or Table 2(b).

For example, the network device may determine, based on the first time-frequency resource that carries the first message, the beam position corresponding to the first time-frequency resource (that is, a beam position at which a terminal device that can send the first message on the first time-frequency resource is located, for example, the beam position at which the first terminal device is located). It can be learned from Table 2(a) or Table 2(b) that a quantity of beam positions corresponding to the first time-frequency resource is greater than or equal to 1. In other words, the first time-frequency resource is configured for a terminal device at at least one beam position (for example, when the SSB #4 indicates the first time-frequency resource, the first time-frequency resource corresponds to terminal devices at two beam positions (that is, a beam position #4 and a beam position #0)). Therefore, when the first time-frequency resource is configured for terminal devices at a plurality of beam positions, the network device cannot learn, based only on the first time-frequency resource, of an accurate beam position at which the terminal device (for example, the first terminal device) that sends the first message is located, and therefore may not select an accurate beam to respond to the first message. Therefore, for determining the beam position corresponding to the first time-frequency resource based on the first message, the configuration rule of the SSB burst set in the first radio frame may be determined based on the information about the first radio frame, to determine an accurate beam position (that is, the beam position at which the first terminal device is located) at which the terminal device that sends the first message on the first time-frequency resource is located.

An example in which an SSB #4 indicates the first time-frequency resource, and the network device sends the SSB #4 by using a beam #4 and a beam #0 sequentially, so that the first time-frequency resource is separately configured for a terminal device at a beam position #4 and a terminal device at a beam position #0; and the first radio frame includes the SSB #0 to the SSB #7 shown in Table 2(a) is used. When receiving the first message on the first time-frequency resource, the network device first determines, based on the first time-frequency resource, the beam positions (that is, the beam position #4 and the beam position #0) corresponding to the first time-frequency resource, further determines the configuration rule in Table 2(a) based on the first radio frame, to learn that the first time-frequency resource is configured for the terminal device at the beam position #4 according to the configuration rule in Table 2(a), and therefore determines that the beam position information of the first terminal device is the beam position #4.

In a third possible implementation, the first message includes information about a second radio frame and first indication information, the information about the second radio frame and the first indication information indicate the beam position at which the first terminal device is located, the first indication information indicates a first group of subframes, the first SSB is located in the second radio frame, and the first SSB is located in the first group of subframes.

For example, the information about the second radio frame may include an index of the second radio frame, or may be other information (for example, some bits of the index of the second radio frame) indicating the second radio frame. This is not limited in embodiments of this application.

For example, in this possible implementation, the second radio frame includes a plurality of SSB burst sets, each SSB burst set includes a plurality of SSBs, and the plurality of SSBs include the first SSB. In other words, each SSB burst set includes the first SSB.

Optionally, different SSB burst sets are located in different groups of subframes in the second radio frame, and different SSB burst sets may have a same configuration rule or different configuration rules. For example, the configuration rule of the SSB burst set may be shown in Table 2(a) or Table 2(b).

For example, the network device may determine, based on the first time-frequency resource that carries the first message, the beam position corresponding to the first time-frequency resource. When the first time-frequency resource is configured for terminal devices at a plurality of beam positions, the network device cannot learn, based only on the first time-frequency resource, of an accurate beam position at which the terminal device (for example, the first terminal device) that sends the first message is located, and therefore may not select an accurate beam to respond to the first message. Therefore, for determining the beam position corresponding to the first time-frequency resource based on the first message, the network device may determine a configuration rule of an SSB burst set in the first group of subframes based on the information about the second radio frame and the first indication information, to determine the beam position (that is, the beam position at which the first terminal device is located) at which the terminal device that sends the first message on the first time-frequency resource is located.

An example in which an SSB #4 indicates the first time-frequency resource, and the network device sends the SSB #4 by using a beam #4 and a beam #0 sequentially, so that the first time-frequency resource is separately configured for a terminal device at a beam position #4 and a terminal device at a beam position #0; and the second radio frame includes the SSB #0 to the SSB #7 shown in Table 2(a) and Table 2(b), and the SSB #0 to the SSB #7 shown in Table 2(a) are located in the first group of subframes is used. When receiving the first message on the first time-frequency resource, the network device first determines, based on the first time-frequency resource, the beam positions (that is, the beam position #4 and the beam position #0) corresponding to the first time-frequency resource, further determines the configuration rule in Table 2(a) based on the information about the second radio frame and the first indication information, to learn that the first time-frequency resource is configured for the terminal device at the beam #4 according to the configuration rule in Table 2(a), and therefore determines that the beam position information of the first terminal device is the beam position #4.

In a fourth possible implementation, the first message includes information about a first SSB group. The first SSB includes the first SSB. For example, the first SSB group may be an SSB burst set.

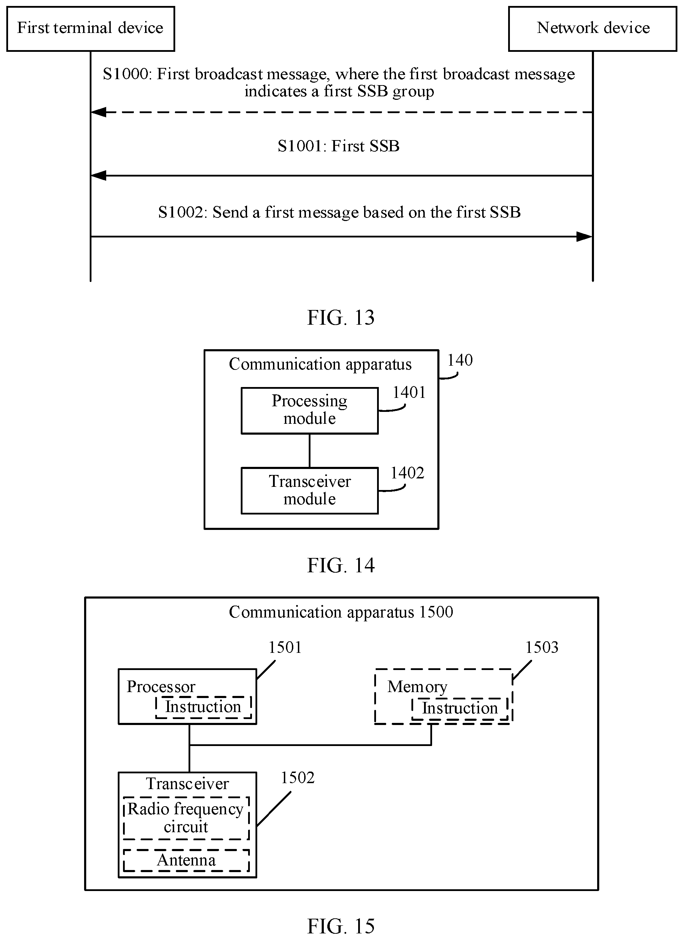

Optionally, the information about the first SSB group is sent by the network device to the first terminal device. For example, the information about the first SSB group may be carried in a first broadcast message. For example, before step S1001, as shown in FIG. 13, the method further includes the following step S1000.

S1000: The network device sends the first broadcast message, and correspondingly, the first terminal device receives the first broadcast message from the network device. The first broadcast message indicates the first SSB group.

Optionally, in this possible implementation, different SSB groups may have a same configuration rule or different configuration rules. For example, the configuration rule of the SSB group may be shown in Table 2(a) or Table 2(b).

For example, the network device may determine, based on the first time-frequency resource that carries the first message, the beam position corresponding to the first time-frequency resource. When the first time-frequency resource is configured for terminal devices at a plurality of beam positions, the network device cannot learn, based only on the first time-frequency resource, of an accurate beam position at which the terminal device (for example, the first terminal device) that sends the first message is located, and therefore may not select an accurate beam to respond to the first message. Therefore, for determining the beam position corresponding to the first time-frequency resource based on the first message, a configuration rule of the first SSB group may be determined based on the information about the first SSB group, to determine the beam position (that is, the beam position at which the first terminal device is located) at which the terminal device that sends the first message on the first time-frequency resource is located.

An example in which an SSB #4 indicates the first time-frequency resource, and the network device sends the SSB #4 by using a beam #4 and a beam #0 sequentially, so that the first time-frequency resource is separately configured for a terminal device at a beam position #4 and a terminal device at a beam position #0; and the first SSB group includes the SSB #0 to the SSB #7 shown in Table 2(a) is used. When receiving the first message on the first time-frequency resource, the network device first determines, based on the first time-frequency resource, the beam positions (that is, the beam position #4 and the beam position #0) corresponding to the first time-frequency resource, further determines the configuration rule in Table 2(a) based on the information about the first SSB group, to learn that the first time-frequency resource is configured for the terminal device at the beam #4 according to the configuration rule in Table 2(a), and therefore may determine that the beam position information of the beam position at which the first terminal device is located is the beam position #4.

In a first example, the information about the first SSB group may be an index of the first SSB group. In other words, the first broadcast message includes the index of the first SSB group, and correspondingly, the first message includes the index of the first SSB group.

In a second example, the information about the first SSB group may be information about a first position. In other words, the first broadcast message includes the information about the first position, and correspondingly, the first message includes the information about the first position. The first position is a position at which the network device sends the first SSB group.

For example, the network device may determine, based on the information about the first position, the first SSB sent by the network device at the first position, and further determine a configuration rule of the first SSB group, to learn of the beam position corresponding to the first time-frequency resource (that is, the beam position at which the first terminal device is located) under the configuration rule.

In a third example, the information about the first SSB group may be a first moment. In other words, the first broadcast message includes the first moment, and correspondingly, the first message includes the first moment. The first moment is a moment at which the network device sends the first SSB group.

For example, the network device may determine, based on the first moment, the first SSB sent by the network device at the first moment, and further determine a configuration rule of the first SSB group, to learn of the beam position corresponding to the first time-frequency resource (that is, the beam position at which the first terminal device is located) under the configuration rule.

Based on this possible implementation and a design of the information about the first SSB group, because time of a random access procedure is short, a quantity of SSB burst sets configured by the network device for the terminal device is not large. Therefore, the first SSB group can be represented by using a small quantity of bits, to reduce signaling overheads.

It should be noted that the foregoing embodiment merely describes examples of possible implementations of the beam position information, information about a radio frame (for example, the information about the first radio frame and/or the information about the second radio frame), and the information about the first SSB group. Actually, the beam position information, the information about the radio frame, and the information about the first SSB group may alternatively have other implementations. This is not limited in embodiments of this application.

It may be understood that, in the foregoing embodiments, the methods and/or the steps implemented by the network device may alternatively be implemented by a part (for example, a processor, a chip, a chip system, a circuit, a logical module, or software) that can be used in the network device, and the methods and/or the steps implemented by the first terminal device may alternatively be implemented by a part (for example, a processor, a chip, a chip system, a circuit, a logical module, or software) that can be used in the first terminal device. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 14 is a diagram of a structure of a communication apparatus 140. The communication apparatus 140 includes a processing module 1401 and a transceiver module 1402. The communication apparatus 140 may be configured to implement functions of the network device or the first terminal device.

In some embodiments, the communication apparatus 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, respectively configured to perform receiving and sending steps performed by the network device or the first terminal device in the foregoing method embodiments and/or configured to support another process of the technology described in this specification. The processing module 1401 may be configured to perform processing (for example, determining and generating) steps performed by the network device or the first terminal device in the foregoing method embodiments and/or configured to support another process of the technology described in this specification.

When the communication apparatus 140 is configured to implement functions of the first terminal device,
in some embodiments, the transceiver module 1402 is configured to receive a first SSB; and the transceiver module 1402 is further configured to send a first message based on the first SSB, where the first message indicates beam position information of a beam position at which the first terminal device is located.

Optionally, the transceiver module 1402 is further configured to receive a first broadcast message, where the first broadcast message indicates a first SSB group, and the first SSB group includes the first SSB.

Optionally, the transceiver module 1402 is further configured to send the first message on a first time-frequency resource.

Optionally, the transceiver module 1402 is further configured to receive a second message, where the second message is used to respond to random access and RRC connection setup.

Optionally, the transceiver module 1402 is further configured to send a third message on a second time-frequency resource, where the third message is used for random access, and the second time-frequency resource indicates an index of the first SSB; and the transceiver module 1402 is further configured to receive a fourth message, where the fourth message indicates the first time-frequency resource, and the fourth message is further used to respond to the random access.

Optionally, the transceiver module 1402 is further configured to receive a fifth message, where the fifth message is used to respond to the RRC connection setup.

When the communication apparatus 140 is configured to implement the functions of the network device,
in some embodiments, the transceiver module 1402 is configured to send a first SSB; and the transceiver module 1402 is further configured to receive a first message, where the first message indicates beam position information of a beam position at which the first terminal device is located.

Optionally, the transceiver module 1402 is further configured to send a first broadcast message, where the first broadcast message indicates a first SSB group, and the first SSB group includes the first SSB.

Optionally, the transceiver module 1402 is further configured to receive the first message on a first time-frequency resource.

Optionally, the transceiver module 1402 is further configured to send a second message, where the second message is used to respond to random access and RRC connection setup.

Optionally, the transceiver module 1402 is further configured to receive a third message on a second time-frequency resource, where the third message is used for random access, and the second time-frequency resource indicates an index of the first SSB; and the transceiver module 1402 is further configured to send a fourth message, where the fourth message indicates the first time-frequency resource, and the fourth message is further used to respond to the random access.

Optionally, the transceiver module 1402 is further configured to send a fifth message, where the fifth message is used to respond to the RRC connection setup.

All related content of the steps in the foregoing method embodiments may be cited in function descriptions of the corresponding functional modules. Details are not described herein again.

In this application, the communication apparatus 140 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 140 in FIG. 14 is a chip or a chip system, a function/an implementation process of the transceiver module 1402 may be implemented by using an input/output interface (or a communication interface) of the chip or the chip system, and a function/an implementation process of the processing module 1401 may be implemented by using a processor (or a processing circuit) of the chip or the chip system.

Because the communication apparatus 140 provided in this embodiment may perform the foregoing methods, for technical effects that can be achieved by the communication apparatus 140, refer to the foregoing method embodiments. Details are not described herein again.

In a possible product form, the first terminal device or the network device in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

In another possible product form, the first terminal device or the network device in embodiments of this application may be implemented by using a general bus architecture. For ease of description, FIG. 15 is a diagram of a structure of a communication apparatus 1500 according to an embodiment of this application. The communication apparatus 1500 includes a processor 1501, and optionally may further include a transceiver 1502. The communication apparatus 1500 may be a network device, or a chip or a chip system in the network device. Alternatively, the communication apparatus 1500 may be a first terminal device, or a chip or a module in the terminal device. FIG. 15 shows only main components of the communication apparatus 1500. In addition to the processor 1501 and the transceiver 1502, the communication apparatus may further include a memory 1503 and an input/output apparatus (not shown in the figure).

Optionally, the processor 1501 is mainly configured to process a communication protocol and communication data, control the entire communication apparatus, execute a software program, and process data of the software program. The memory 1503 is mainly configured to store the software program and data. The transceiver 1502 may include a radio frequency circuit and an antenna. The radio frequency circuit is mainly configured to perform conversion between a baseband signal and a radio frequency signal, and process the radio frequency signal. The antenna is mainly configured to receive and send radio frequency signals in a form of an electromagnetic wave. The input/output apparatus, such as a touchscreen, a display, or a keyboard, is mainly configured to receive data input by a user and output data to the user.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process the data of the software program. When data needs to be sent in a wireless manner, the processor 1501 performs baseband processing on the to-be-sent data, and then outputs a baseband signal to the radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1501. The processor 1501 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 140 may be in a form of the communication apparatus 1500 shown in FIG. 15.

In an example, a function/implementation process of the processing module 1401 and a function/implementation process of the transceiver module 1402 in FIG. 14 may be implemented by the processor 1501 in the communication apparatus 1500 shown in FIG. 15 by invoking computer-executable instructions.

In another example, the function/implementation process of the processing module 1401 in FIG. 14 may be implemented by the processor 1501 in the communication apparatus 1500 shown in FIG. 15 by invoking computer-executable instructions stored in the memory 1503. The function/implementation process of the transceiver module 1402 in FIG. 14 may be implemented by the transceiver 1502 in the communication apparatus 1500 shown in FIG. 15.

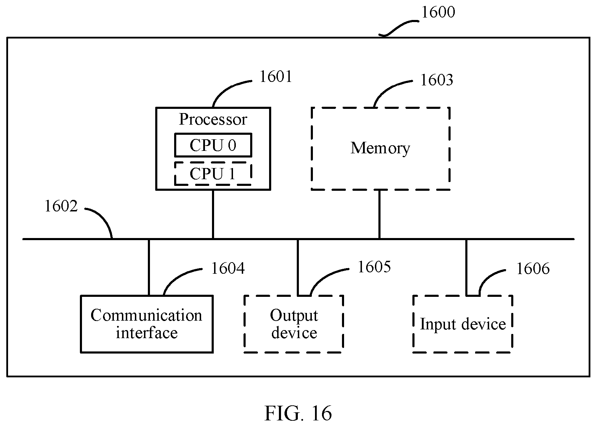

In still another possible product form, the network device or the first terminal device in this application may use a composition structure shown in FIG. 16, or include components shown in FIG. 16. FIG. 16 is a diagram of composition of a communication apparatus 1600 according to this application. The communication apparatus 1600 may be a first terminal device, or a chip or a system-on-a-chip in the first terminal device, or may be a network device, or a module, a chip, or a system-on-a-chip in the network device.

As shown in FIG. 16, the communication apparatus 1600 includes at least one processor 1601 and at least one communication interface (in FIG. 16, an example in which one communication interface 1604 and one processor 1601 are included is merely used for description). Optionally, the communication apparatus 1600 may further include a communication bus 1602 and a memory 1603.

The processor 1601 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1601 may alternatively be another apparatus having a processing function, for example, a circuit, a component, or a software module. This is not limited.

The communication bus 1602 is configured to connect different components in the communication apparatus 1600, so that the different components can communicate with each other. The communication bus 1602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of description, only one thick line is used to represent the bus in FIG. 16, but this does not mean that there is only one bus or one type of bus.

The communication interface 1604 is configured to communicate with another device or a communication network. For example, the communication interface 1604 may be a module, a circuit, a transceiver, or any apparatus that can implement communication. Optionally, the communication interface 1604 may alternatively be an input/output interface located in the processor 1601, and is configured to implement signal input and signal output of the processor.

The memory 1603 may be an apparatus having a storage function, and is configured to store instructions and/or data. The instruction may be a computer program.

For example, the memory 1603 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a disk storage medium, or another magnetic storage device. This is not limited.

It should be noted that the memory 1603 may exist independently of the processor 1601, or may be integrated with the processor 1601. The memory 1603 may be located inside the communication apparatus 1600, or may be located outside the communication apparatus 1600. This is not limited. The processor 1601 may be configured to execute the instructions stored in the memory 1603, to implement the method provided in the following embodiments of this application.

In an optional implementation, the communication apparatus 1600 may further include an output device 1605 and an input device 1606. The output device 1605 communicates with the processor 1601, and may display information in a plurality of manners. For example, the output device 1605 may be a liquid crystal display (liquid crystal display, LCD), a light emitting diode (light emitting diode, LED) display device, a cathode ray tube (cathode ray tube, CRT) display device, or a projector (projector). The input device 1606 communicates with the processor 1601, and may receive an input from a user in a plurality of manners. For example, the input device 1606 may be a mouse, a keyboard, a touchscreen device, or a sensor device.

In some embodiments, in hardware implementation, a person skilled in the art may figure out that the communication apparatus 140 shown in FIG. 14 may be in a form of the communication apparatus 1600 shown in FIG. 16.

In an example, a function/implementation process of the processing module 1401 in FIG. 14 may be implemented by the processor 1601 in the communication apparatus 1600 shown in FIG. 16 by invoking computer-executable instructions stored in the memory 1603. A function/implementation process of the transceiver module 1402 in FIG. 14 may be implemented by the communication interface 1604 in the communication apparatus 1600 shown in FIG. 16.

It should be noted that the structure shown in FIG. 16 does not constitute a specific limitation on the network device or the first terminal device. For example, in some other embodiments of this application, the network device or the first terminal device may include more or fewer components than those shown in the figure, a combination of some components, splitting of some components, or different arrangements of the components. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed operating process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, in other words, may be located together in a same place or distributed on a plurality of network units. Parts displayed as units may be or may be not physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An information sending method, applied to a first terminal device, wherein the method comprises:
receiving a first synchronization signal/physical broadcast channel block SSB; and
sending a first message based on the first SSB, wherein the first message indicates beam position information of a beam position at which the first terminal device is located.

2. The method according to claim 1, wherein the first message comprises an identifier of the beam position.

3. The method according to claim 1, wherein the first message comprises an index of a first radio frame, the index of the first radio frame indicates the beam position, and the first SSB is located in the first radio frame.

4. The method according to claim 1, wherein the first message comprises an index of a second radio frame and first indication information, the index of the second radio frame and the first indication information indicate the beam position, the first indication information indicates a first group of subframes, the first SSB is located in the second radio frame, and the first SSB is located in the first group of subframes.

5. The method according to claim 1, wherein the method further comprises:
receiving a first broadcast message, wherein the first broadcast message indicates a first SSB group, and the first SSB group comprises the first SSB.

6. The method according to claim 5, wherein the first broadcast message comprises an index of the first SSB group, and correspondingly, the first message comprises the index of the first SSB group.

7. The method according to claim 5, wherein the first broadcast message comprises information about a first position, correspondingly, the first message comprises the information about the first position, and the first position is a position at which a network device sends the first SSB group.

8. The method according to claim 5, wherein the first broadcast message comprises a first moment, correspondingly, the first message comprises the first moment, and the first moment is a moment at which a network device sends the first SSB group.

9. The method according to any one of claims 1 to 8, wherein the sending the first message comprises:
sending the first message on a first time-frequency resource.

10. The method according to claim 9, wherein the first time-frequency resource indicates an index of the first SSB, and the first message is further used for random access and radio resource control RRC connection setup; and
the method further comprises:
receiving a second message, wherein the second message is used to respond to the random access and the RRC connection setup.

11. The method according to claim 9, wherein the method further comprises:
sending a third message on a second time-frequency resource, wherein the third message is used for random access, and the second time-frequency resource indicates an index of the first SSB; and
receiving a fourth message, wherein the fourth message indicates the first time-frequency resource, and the fourth message is further used to respond to the random access.

12. The method according to claim 11, wherein the first message is further used for RRC connection setup, and the method further comprises:
receiving a fifth message, wherein the fifth message is used to respond to the RRC connection setup.

13. An information receiving method, applied to a network device, wherein the method comprises:
sending a first synchronization signal/physical broadcast channel block SSB; and
receiving a first message, wherein the first message indicates beam position information of a beam position at which a first terminal device is located.

14. The method according to claim 13, wherein the first message comprises an identifier of the beam position.

15. The method according to claim 13, wherein the first message comprises an index of a first radio frame, the index of the first radio frame indicates the beam position, and the first SSB is located in the first radio frame.

16. The method according to claim 13, wherein the first message comprises an index of a second radio frame and first indication information, the index of the second radio frame and the first indication information indicate the beam position, the first indication information indicates a first group of subframes, the first SSB is located in the second radio frame, and the first SSB is located in the first group of subframes.

17. The method according to claim 13, wherein the method further comprises:
sending a first broadcast message, wherein the first broadcast message indicates a first SSB group, and the first SSB group comprises the first SSB.

18. The method according to claim 17, wherein the first broadcast message comprises an index of the first SSB group, and correspondingly, the first message comprises the index of the first SSB group.

19. The method according to claim 17, wherein the first broadcast message comprises information about a first position, correspondingly, the first message comprises the information about the first position, and the first position is a position at which the network device sends the first SSB group.

20. The method according to claim 17, wherein the first broadcast message comprises a first moment, correspondingly, the first message comprises the first moment, and the first moment is a moment at which the network device sends the first SSB group.

21. The method according to any one of claims 13 to 20, wherein the receiving the first message comprises:
receiving the first message on a first time-frequency resource.

22. The method according to claim 21, wherein the first time-frequency resource indicates an index of the first SSB, and the first message is further used for random access and radio resource control RRC connection setup; and
the method further comprises:
sending a second message, wherein the second message is used to respond to the random access and the RRC connection setup.

23. The method according to claim 21, wherein the method further comprises:
receiving a third message on a second time-frequency resource, wherein the third message is used for random access, and the second time-frequency resource indicates an index of the first SSB; and
sending a fourth message, wherein the fourth message indicates the first time-frequency resource, and the fourth message is further used to respond to the random access.

24. The method according to claim 23, wherein the first message is further used for RRC connection setup, and the method further comprises:
sending a fifth message, wherein the fifth message is used to respond to the RRC connection setup.

25. A communication system, wherein the communication system comprises a first terminal device and a network device;
the first terminal device is configured to perform the method according to any one of claims 1 to 12; and
the network device is configured to perform the method according to any one of claims 13 to 24.

26. A communication apparatus, wherein the communication apparatus comprises a transceiver module and a processing module;
the transceiver module is configured to perform a receiving behavior or a sending behavior in the method according to any one of claims 1 to 12, or configured to perform a receiving behavior or a sending behavior in the method according to any one of claims 13 to 24; and
the processing module is configured to perform a processing behavior in the method according to any one of claims 1 to 12, or configured to perform a processing behavior in the method according to any one of claims 13 to 24.

27. A communication apparatus, wherein the communication apparatus comprises a processor; and the processor is configured to run a computer program or instructions, to cause the communication apparatus to perform the method according to any one of claims 1 to 12, or cause the communication apparatus to perform the method according to any one of claims 13 to 24.

28. A computer-readable storage medium, wherein the computer-readable storage medium stores computer instructions or a program, and when the computer instructions or the program is run on a computer, the method according to any one of claims 1 to 12 is performed, or the method according to any one of claims 13 to 24 is performed.

29. A computer program product, wherein when the computer program product runs on a communication apparatus, the communication apparatus is caused to perform the method according to any one of claims 1 to 12, or the communication apparatus is caused to perform the method according to any one of claims 13 to 24.

30. A chip, comprising a processor, wherein the processor is coupled to an interface circuit, the interface circuit is configured to receive computer-executable instructions, and when the executable instructions are executed by the processor, the chip is caused to perform the method according to any one of claims 1 to 12, or the chip is caused to perform the method according to any one of claims 13 to 24.
